# EUROPEAN PATENT APPLICATION

(11) **EP 4 387 034 A1**
(43) Date of publication of application: **19.06.2024**
(21) Application number: 22213882.8
(22) Date of filing: 15.12.2022
(51) Int. Cl.: H02J 3/38

(54) **A WIND TURBINE POWER CONTROLLER AND WIND TURBINE SYSTEM**

(71) Applicant: Ventum Dynamics Group AS, 4031 Stavanger (NO)
(72) Inventor: HANSEN, Martin, 2860 Søborg (DK); LARSEN, Søren Mac, 2300 København S (DK); JENSEN, Kim Bo, 3400 Hillerød (DK); STUMPF, Rebekka, 4016 STAVANGER (NO)
(74) Representative: Brann AB

(57) **Abstract**

A power controller (130a) controls an amount of electric output power from a wind turbine generator (121a) to an alternating current network. The power controller (130a) includes a rectifier unit receiving alternating electric current from the wind turbine generator (121a) and provides basic electric energy in the form of a base direct-current voltage. A direct-current output interface in the controller delivers an output direct-current voltage (DC+) based on the base direct-current voltage. The direct-current output interface is configured to be connected in series with the direct-current output interface of at least one additional power controller (130b, 130c) to an input interface (141) of an inverter unit (140) arranged to produce output alternating power (AC_{G}) to the alternating current network based on the output direct-current voltages (DC+) from said in-series connected direct-current output interfaces.

## Description

### TECHNICAL FIELD

The present invention relates generally to efficient handling of wind-power produced electric energy. Especially, the invention relates to a power controller for controlling an amount of electric output power forwarded from a wind turbine generator to an alternating current network according to the preamble of claim 1. The invention also concerns a wind turbine system including at least two instances of the proposed power controller.

### BACKGROUND

Wind power, i.e. the use of wind to generate mechanical power, which, in turn, is converted to electric power using electrical generators is an increasingly important source of energy. Wind power is advantageous because it is a sustainable and renewable source of energy having an impact on the environment, which is much smaller than for example that of fossil fuels.

However, obtaining useful electric power based on wind power is challenging, inter alia because wind power is an intermittent energy source that cannot be dispatched on demand. Further, since electrical generators are used for transforming mechanical power into electricity, wind power results in alternating-current electricity. This is different from for example solar power, which typically comes in the form of direct-current electricity. Due to the unceasing fluctuations in wind speed and/or wind direction, both the frequency and amplitude of the resulting alternating-current electricity also varies substantially over time. Therefore, different kinds of technical means must be applied to stabilize the electric power before feeding it to the grid.

US 7,894,211 shows a wind energy converter that has a generator adapted to be coupled directly to a wind turbine without need for a mechanical gear unit. A rectifier is coupled to the generator and a converter is coupled to the rectifier to provide a regulated DC bus voltage as a function of a controlled duty cycle. An inverter is coupled to the converter for providing a regulated AC output to a load. In embodiment, a hybrid configuration utilizes a photo voltaic (PV) panel along with a micro wind turbine. Here, the PV panel is interfaced to the DC link via a DC-DC converter. This interface may be controlled to ensure that the PV panel works at maximum efficiency.

US 9,350,261 discloses a power converter apparatus including a detector detecting a system voltage, and a controller stably outputting power generated by the wind power generator to the power system based on a power instruction value, and controlling an output voltage to stabilize the system voltage based on a voltage instruction value in a case where the system voltage is within a preset range, and controlling an active current component and a reactive current component of an output current to stabilize the system voltage of the power system by use of a voltage drop due to impedance of the power system in a case where the system voltage is outside the preset range.

US 2022/0311354 describes procedures and systems for discharging system capacitors and de-energizing power transmission systems having Modular Multilevel Converter (MMC) topologies by intelligent control of MMC cell components including configuration of bypass and insert switches using integrated DC choppers to effectively deenergize MMC cell capacitors and/or DC-link capacitors under operating conditions such as after a normal stop, for protection against over-voltages, dumping turbine energy, and under certain hardware fault conditions. Inter alia, the disclosure describes a converter system, which operates by converting the AC power supplied by a generator to DC via side converters used for power conversion. For example, a machine side converter (MSC) acts as a rectifier converting the AC to DC, which may then be converted back to AC via a line side converter (LSC) inverter.

Thus, different technical solutions are known for adapting wind-power based electric energy for input to the grid. However, there is yet no solution that enables a number of small-scale wind turbines to be jointly connected to the grid in a straightforward and simple manner.

### SUMMARY

The object of the present invention is therefore to offer a solution to the above problem and enable households, smaller businesses and large scale industries to supply wind-power based electricity to the grid in a conveniently scalable manner, similar to what is possible with solar power today.

According to one aspect of the invention, the object is achieved by a power controller for controlling an amount of electric output power forwarded from a wind turbine generator to an alternating current network, such as the grid. The power controller contains a rectifier unit and a direct-current output interface. The rectifier unit is configured to receive alternating electric current from the wind turbine generator and based thereon provide basic electric energy in the form of a base direct-current voltage. The direct-current output interface is configured to deliver an output direct-current voltage based on the base direct-current voltage. The direct-current output interface is further configured to be connected in series with the direct-current output interface of at least one additional power controller to an input interface of an inverter unit, which, in turn, is arranged to produce output alternating power to the alternating current network based on the output direct-current voltages from the in-series connected direct-current output interfaces of the power controllers.

The above power controller is advantageous because it facilitates interconnecting a number of wind turbines to the grid via a respective power controller and common inverter unit. It is also rendered uncomplicated to add, or subtract, one or more wind turbines to/from such an arrangement if a user wishes to increase/decrease the capacity of the arrangement at a later stage.

According to one embodiment of this aspect of the invention, the power controller contains a processing unit and a speed sensor. The processing unit is configured to generate a first control signal adapted to switch off the rectifier unit in response to a first sensor signal indicating that a magnitude of a wind propelling the wind turbine generator exceeds a threshold value. The speed sensor is configured to generate the first sensor signal, for example by measuring a rotation speed of a turbine mechanically linked to the wind turbine generator. Thus, emergency braking is made possible.

According to another embodiment of this aspect of the invention, the power controller contains a power-measurement unit and an active load. The power-measurement unit is configured to produce a second sensor signal indicating an amount of basic electric energy provided by the rectifier unit. The active load is configured to drain off a variable portion of the basic electric energy in response to a second control signal, preferably according to a linear relationship. Here, the processing unit is further configured to obtain the second sensor signal and in response thereto generate the second control signal, such that the base direct-current voltage attains a value within a prescribed range. As a result, if for example, the alternating current network is unable to receive all the electric energy provided by the generator, an appropriate portion of this energy may be drained off in the active load.

According to another embodiment of this aspect of the invention, the active load is configured to produce a third sensor signal indicating a temperature of the active load, and the processing unit is configured to produce the second control signal on the further basis of the third sensor signal. Thereby, the energy drain off in the active load may be fine-tuned based on the temperature of the active load, so that overloading can be avoided. According to yet another embodiment of this aspect of the invention, the power controller contains a DC-to-DC converter configured to receive the base direct-current voltage and based thereon produce the output direct-current voltage to the direct-current output interface. Hence, although the base direct-current voltage may vary due to variations in the wind, the output direct-current voltage may be held stable, or at least within a voltage range suitable for an inverter to produce output alternating power to the alternating current network.

According to still another embodiment of this aspect of the invention, the DC-to-DC converter is configured to produce a fourth sensor signal indicating the value of the base direct-current voltage, and the processing unit is configured to obtain the fourth sensor signal. In response thereto, the processing unit is further configured produce a third control signal, which is adapted to control the DC-to-DC converter to produce the output direct-current voltage based on a maximum-power-point-tracking (MPPT) algorithm. Thus, the DC-to-DC converter may be controlled to behave like a photovoltaic inverter of a solar panel, such that the DC-to-DC converter operates at, or close to, a peak power point under varying production conditions, for instance in terms of shifting wind speed and/or directions. This, in turn, also facilitates co-existence with one or more solar panels in the chain of in-series connected direct-current output interfaces of the power controllers.

According to a further embodiment of this aspect of the invention, the power controller includes a power supply unit configured to obtain the base direct-current voltage. If the base direct-current voltage exceeds a threshold voltage, on the basis of the base direct-current voltage, the power controller is configured to provide a supply voltage to the processing unit. Consequently, the power controller may be self-supporting, and need not be connected to any power source for its operation. This is especially advantageous because it enables braking the turbine at any point in time should this be needed for safety reasons without having to rely on external power. The power supply unit also facilitates installation, improves the reliability and reduces the cost of the power controller.

Preferably, the power controller also contains a speed sensor configured to generate the first sensor signal, and the power supply unit is further configured to provide the supply voltage to the speed sensor, as well as to any other units or components in the power controller relying on electric power for its operation.

According to another aspect of the invention, the object is achieved by a wind turbine system including an inverter unit and at least two instances of the proposed power controller. The inverter unit is configured to receive input DC power via an input interface and in response thereto produce output alternating power to an alternating current network, e.g. the grid, via an output interface. Each of the at least two instances of the power controller is configured to receive alternating electric current from a respective wind turbine generator and in response thereto produce a respective output direct-current voltage on its respective output interface. The output interfaces, in turn, are connected in series with one another to the input interface of the inverter unit. The advantages of this wind turbine system are apparent from the discussion above with reference to the proposed power controller.

According to one embodiment of this aspect of the invention, each of the power controllers is co-located with a respective generator in a shroud structure configured to feed an omnidirectional flow of wind towards a turbine being mechanically linked to the respective generator. The turbine is here arranged on a central axis in the shroud structure. Thereby, a large proportion of the wind energy may be utilized, and the losses when converting mechanical energy into electrical energy may be held low.

According to another embodiment of this aspect of the invention, the shroud structure is rotationally symmetric with respect to the symmetry axis, and the shroud structure includes a set of stacked concentric blade rings encircling an accumulation chamber. The set of stacked concentric blade rings is configured to feed wind from any direction towards the turbine. As a result, the design is insensitive to the wind direction.

Preferably, the power controller and the respective generator are comprised in a common compartment arranged on a support member in the shroud structure. Namely, thereby also the electrical transmission losses may be minimized, and a minimal amount of cabling is required.

According to yet another embodiment of this aspect of the invention, the common compartment is arranged in close proximity to the turbine. This allows for a compact and efficient overall design.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: shows a wind turbine system according to one embodiment of the invention, which system includes an inverter unit and three power controllers;
- Figure 2: shows a power controller according to one embodiment of the invention; and
- Figure 3: illustrates a design of a shroud structure according to one embodiment of the invention.

### DETAILED DESCRIPTION

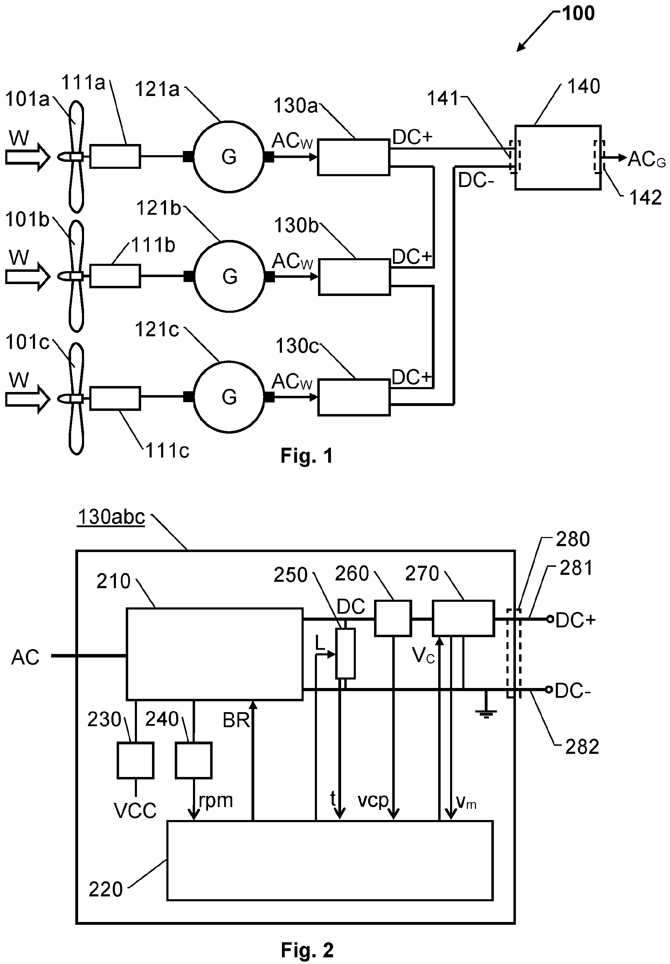

In Figure 1, we see a wind turbine system 100 according to one embodiment of the invention, which system 100 includes an inverter unit 140 and three power controllers 130a, 130b and 130c respectively.

The inverter unit 140 is configured to receive input DC power via an input interface 141 and in response thereto produce output alternating power AC_{G} to an alternating current network, e.g. the grid, via an output interface 142. Each of the power controllers 130a, 130b and 130c is configured to receive alternating electric current ACw from a respective wind turbine generator 121a, 121b and 121c respectively. In response to the alternating electric current ACw each power controller 130a, 130b and 130c is configured to produce a respective output direct-current voltage DC+ on its respective output interface 280. As discussed initially, the alternating electric currents ACw from the turbine generators 121a, 121b and 121c typically vary substantially both in terms of frequency and amplitude. For example, the frequency may range from 1 Hz to 100 Hz, and the amplitude may exhibit voltages from zero up to a specified maximum value for the turbine generators 121a, 121b or 121c respectively. As will be elaborated upon below with reference to Figure 2, the output alternating power AC_{G}, however, will essentially exhibit no variations.

The output interfaces are connected in series with one another to the input interface 141 of the inverter unit 140. Thus, the input interface 141 receives a DC voltage representing a sum of the individual DC voltages of the output interfaces of the power controllers 130a, 130b and 130c.

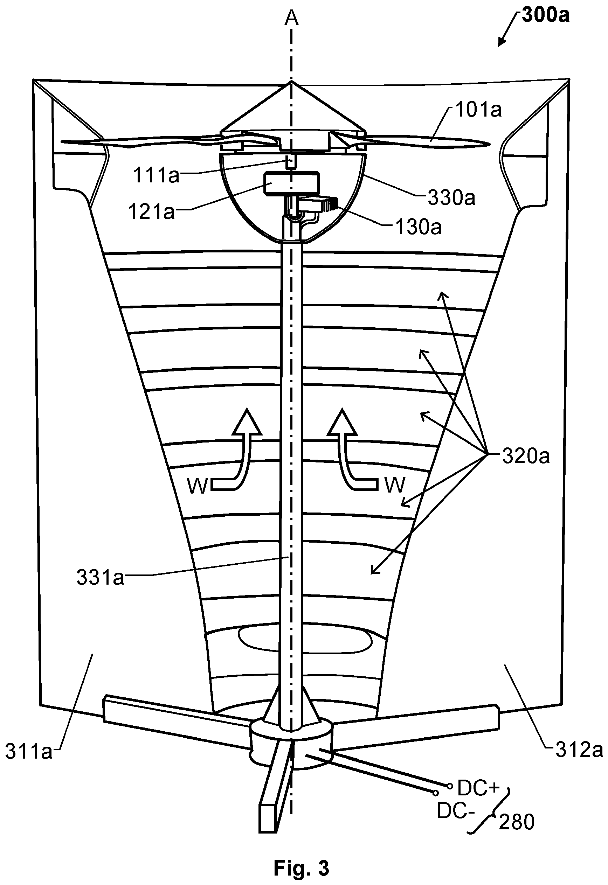

In Figure 3, we see a cut-through view of a shroud structure 300a illustrating a power controller being co-located with a generator. Namely, according to one embodiment of the invention each of the power controllers 130a, 130b and 130c is co-located with a respective generator 121a, 121b and 121c in the a shroud structure 300a. Thus, a first power controller 130a is co-located with a first generator 121a, a second power controller 130b is co-located with a second generator 121b, and a third power controller 130c is co-located with a third generator 121c. The shroud structure 300a is configured to feed an omnidirectional flow of wind W towards a turbine, here exemplified by a propeller 101a, which is mechanically linked to the generator 121a. The turbine 101a is arranged on a central axis A in the shroud structure 300a, for example on a pile shaped support member 331a. Such a design enables a relatively large proportion of the energy of the wind W to be used. This also renders it possible to keep the conversion losses from mechanical to electrical energy low.

To attain a physically compact design, it is beneficial if the power controller 130a and the generator 121a are comprised in a common compartment 330a, which is arranged on the support member 331a in the shroud structure 300a. This is also practical, since it allows for convenient replacement of all electrical components in connection with service/maintenance of the wind turbine.

Moreover, it is generally advantageous to arrange the common compartment 330a in close proximity to the turbine 101a, since this vouches for low mechanical losses.

The shroud structure 300a is preferably rotationally symmetric with respect to the symmetry axis A because this basically makes the design independent of the wind direction. Nevertheless, should there be a predominant wind direction, it is advantageous to arrange the shroud structure 300a such that a pair of support plates 311a and 312a faces the predominant wind direction, and thus assist in guiding the wind W into an accumulation chamber of the shroud structure 300a. The shroud structure 300a contains a set of stacked concentric blade rings 320a that encircle the accumulation chamber, and are mounted on the support plates 311a and 312a plus and third support plate (not shown). The set of stacked concentric blade rings 320a is configured to feed wind W from any direction up towards the turbine 101a.

Figure 2 shows a power controller 130abc according to one embodiment of the invention. The power controller 130abc is arranged to control an amount of electric output power being forwarded from a particular one of the wind turbine generators 121a, 121b or 121c to an alternating current network, typically represented by the grid, but technically any kind of AC network.

The power controller 130abc contains a rectifier unit 210, a direct-current output interface 280, and preferably a processing unit 220.

The rectifier unit 210 is configured to receive alternating electric current ACw from the wind turbine generator 121a and based thereon provide basic electric energy in the form of a base direct-current voltage DC. Due to intensity variations in the wind W propelling the turbine 101a, the wind turbine generator 121a produces electricity whose frequency and amplitude vary substantially over time, for example from 1 Hz to 100 Hz, and from zero volt up to a specified maximum value for the turbine generator 121a respectively.

The processing unit 220 is configured to generate a first control signal BR adapted to switch off the rectifier unit 210 if needed. Typically, it may be necessary to switch off the rectifier unit 210 if the wind W contains such an amount of energy that the turbine 101a is caused to rotate at an excessive speed, which risks damaging one or more components in the power controller 130abc.

To monitor the magnitude of the wind W that propels the wind turbine generator 121a, the power controller 130abc may include a speed sensor 240 configured to generate a first sensor signal rpm indicating that said magnitude, for example by registering a rotation speed of the turbine 101a. Based upon the first sensor signal rpm it can be deduced that the magnitude of the wind W exceeds a threshold value. According to one embodiment of the invention, the first sensor signal rpm is produced based on opto-coupler technology using a constant-current generator to measure the rotation speed by comparing two phases at high accuracy.

In response to a first sensor signal rpm, the processing unit 220 is configured to generate the first control signal BR. According to embodiments of the invention, the rectifier unit 210 may contain MOSFET circuitry, which (a) is adapted to receive three phase AC from the wind turbine generator 121a via three cables, and based thereon provide basic electric energy in the form of a base direct-current voltage DC, and (b) short-cut the three cables from the wind turbine generator 121a if the first control signal BR is received - thus causing a "hard" brake of the wind turbine generator 121a. "Soft" braking may be implemented by instead controlling relevant MOSFET elements by a pulse-width modulated (PWM) signal in response to the first control signal BR.

Preferably, irrespective of the type of braking applied, for safety reasons, during an idle interval thereafter, say 10 seconds to 1 minute, the turbine 101a is prevented from rotating.

The direct-current output interface 280 is configured to deliver an output direct-current voltage DC+ that, in turn, is based on the base direct-current voltage DC. The direct-current output interface 280 is configured to be connected in series with the direct-current output interface 280 of at least one other power controller, such as 130b and 130c of Figure 1, to an input interface 141 of an inverter unit 140.

The inverter unit 140 is arranged to produce output alternating power AC_{G} to the alternating current network. Consequently, the output alternating power AC_{G} is based on the combined output direct-current voltages DC+ from all in-series connected direct-current output interfaces 280 of the power controllers.

According to one embodiment of the invention, the power controller 130abc contains a power-measurement unit 260 and an active load 250. The power-measurement unit 260 is configured to produce a second sensor signal vcp indicating an amount of basic electric energy provided by the rectifier unit 210, for instance in terms of voltage and current, or power. The active load 250 is configured to drain off a variable portion of the basic electric energy in response to a second control signal L, so that only an amount of electric energy that can be accepted by the alternating current network is fed thereto. Here, the processing unit 220 is further configured to obtain the second sensor signal vcp, and in response thereto generate the second control signal L. Specifically, the second control signal L is generated such that the base direct-current voltage DC attains a value within a prescribed range, which, in turn, is set to match the prerequisites of the alternating current network.

Naturally, the active load 250 may produce heat in connection with draining off the basic electric energy. Therefore, according to one embodiment of the invention, the active load 250 is configured produce a third sensor signal t indicating a temperature of the active load 250. The processing unit 220 is configured to obtain the third sensor signal t, and on the further basis thereon produce the second control signal L. Thus, the operation of the active load 250 may be finetuned to avoid overloading its circuitry.

According to one embodiment of the invention, the power controller 130abc contains a DC-to-DC converter 270, which is configured to receive the base direct-current voltage DC and based thereon produce the output direct-current voltage DC+ to the direct-current output interface 280. Thereby, the voltage level of the direct-current output interface 280 is adjustable, and preferably, the DC-to-DC converter 270 is configured to produce a fourth sensor signal vₘ indicating the value of the base direct-current voltage DC. The processing unit 220 is here configured to obtain the fourth sensor signal vₘ, and in response thereto produce a third control signal V_{C} adapted to control the DC-to-DC converter 270, for example to produce the output direct-current voltage DC+ based on a MPPT algorithm. Namely, thereby the DC-to-DC converter may be controlled to behave like a photovoltaic inverter of a solar panel, such that the DC-to-DC converter operates at, or close to, a peak power point under varying production conditions, for instance in terms of shifting wind speed and/or directions. This type of behavior, in turn, facilitates for the power controller 130abc co-exist with solar panels in a chain of in-series connected direct-current units to the input interface 141 of the inverter unit 140. More important perhaps, an off-the-shelf solar panel inverter unit 140 may be used also for a wind turbine system.

According to one embodiment of the invention, the power controller 130abc contains a power supply unit 230 configured to obtain the base direct-current voltage DC. Given that the base direct-current voltage DC exceeds a threshold voltage, the power supply unit 230 is configured to provide a supply voltage to the processing unit 220 based on the base direct-current voltage DC. Thus, the power supply unit 230 may provide the supply voltage to other units/components in the power controller 130a, e.g. the speed sensor 240.

Variations to the disclosed embodiments can be understood and effected by those skilled in the art in practicing the claimed invention, from a study of the drawings, the disclosure, and the appended claims.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage. Any reference signs in the claims should not be construed as limiting the scope.

It is also to be noted that features from the various embodiments described herein may freely be combined, unless it is explicitly stated that such a combination would be unsuitable.

The invention is not restricted to the described embodiments in the figures, but may be varied freely within the scope of the claims.

## Claims

1. A power controller (130abc) for controlling an amount of electric output power forwarded from a wind turbine generator (121a) to an alternating current network, which power controller (130a) comprises:
a rectifier unit (210) configured to receive alternating electric current (ACw) from the wind turbine generator (121a) and based thereon provide basic electric energy in the form of a base direct-current voltage (DC),
**characterized in that** the power controller (130a) comprises a direct-current output interface (280) configured to:
deliver an output direct-current voltage (DC+) based on the base direct-current voltage (DC), and
be connected in series with the direct-current output interface (280) of at least one additional power controller (130b, 130c) to an input interface (141) of an inverter unit (140) arranged to produce output alternating power (AC_{G}) to the alternating current network based on the output direct-current voltages (DC+) from said in-series connected direct-current output interfaces (280).

2. The power controller (130abc) according to claim 1, comprising:
a processing unit (220) configured to generate a first control signal (BR) adapted to switch off the rectifier unit (210) in response to a first sensor signal (rpm) indicating that a magnitude of a wind (W) propelling the wind turbine generator (121a) exceeds a threshold value, and
a speed sensor (240) configured to generate the first sensor signal (rpm).

3. The power controller (130abc) according to claim 2, comprising:
a power-measurement unit (260) configured to produce a second sensor signal (vcp) indicating an amount of basic electric energy provided by the rectifier unit (210), and
an active load (250) configured to drain off a variable portion of the basic electric energy in response to a second control signal (L), and
the processing unit (220) is further configured to obtain the second sensor signal (vcp) and in response thereto generate the second control signal (L) such that the base direct-current voltage (DC) attains a value within a prescribed range.

4. The power controller (130abc) according to claim 3, wherein the active load (250) is configured produce a third sensor signal (t) indicating a temperature of the active load (250), and
the processing unit (220) is configured to produce the second control signal (L) on the further basis of the third sensor signal (t).

5. The power controller (130abc) according to any one of the claims 2 to 4, comprising a DC-to-DC converter (270) configured to receive the base direct-current voltage (DC) and based thereon produce the output direct-current voltage (DC+) to the direct-current output interface (280).

6. The power controller (130abc) according to claim 5, wherein:
the DC-to-DC converter (270) is configured to produce a fourth sensor signal (vₘ) indicating the value of the base direct-current voltage (DC), and
the processing unit (220) is configured to obtain the fourth sensor signal (vₘ) and in response thereto produce a third control signal (V_{C}) adapted to control the DC-to-DC converter (270) to produce the output direct-current voltage (DC+) based on a maximum-power-point-tracking algorithm.

7. The power controller (130abc) according to any one of the claims 2 to 6, further comprising:
a power supply unit (230) configured to obtain the base direct-current voltage (DC), and if the base direct-current voltage (DC) exceeds a threshold voltage provide a supply voltage to the processing unit (220) based on the base direct-current voltage (DC).

8. The power controller (130abc) according to claim 7, wherein the power supply unit (230) is further configured to provide the supply voltage to the speed sensor (240).

9. A wind turbine system (100) comprising:
an inverter unit (140) configured to receive input DC power via an input interface (141) and in response thereto produce output alternating power (AC_{G}) to an alternating current network via an output interface (142), and
at least two instances of the power controller (130a, 130b, 130c) according to any one of the preceding claims, which each is configured to receive alternating electric current (ACw) from a respective wind turbine generator (121a, 121b, 121c) and in response thereto produce a respective output direct-current voltage (DC+) on its respective output interface (280), and
wherein said output interfaces (280) are connected in series with one another to the input interface (141) of the inverter unit (140).

10. The wind turbine system (100) according to claim 9, wherein each of said power controllers (130a, 130b, 130c) is co-located with a respective generator (121a, 121b, 121c) in a shroud structure (300a) configured to feed an omnidirectional flow of wind (W) towards a turbine (101a) mechanically linked to the respective generator, and which turbine (101a) is arranged on a central axis (A) in the shroud structure (300a).

11. The wind turbine system (100) according to claim 10, wherein each of said power controllers (130a, 130b, 130c) and the respective generator (121a, 121b, 121c) are comprised in a common compartment (330a) arranged on a support member (331a) in the shroud structure (300a).

12. The wind turbine system (100) according to claim 11, wherein the common compartment (330a) is arranged in close proximity to the turbine (101a).

13. The wind turbine system (100) according to any one of claims 10 to 12, wherein the shroud structure (300a) is rotationally symmetric with respect to the symmetry axis (A), and the shroud structure (300a) comprises a set of stacked concentric blade rings (320a) encircling an accumulation chamber, which set of stacked concentric blade rings (320a) is configured to feed wind (W) from any direction towards the turbine (101a).
